# EUROPEAN PATENT APPLICATION

(11) **EP 1 666 114 A1**
(43) Date of publication of application: **07.06.2006**
(21) Application number: 04771394.6
(22) Date of filing: 03.08.2004
(51) Int. Cl.: B01D 11/04

(54) **METHOD AND DEVICE FOR SUBSTANCE SEPARATION USING COMPATIBLE MULTIPHASE SOLVENT SYSTEM**

(30) Priority: 07.08.2003 JP 2003206403
(71) Applicant: Tokyo University of Agriculture and Technology Tlo Co., Ltd., Tokyo 184-8588 (JP)
(72) Inventor: CHIBA, K., Agriculture Dept., Tokyo University of, Fuchu-shi, Tokyo 1838509 (JP)
(74) Representative: Lang, Johannes
(86) International application number: PCT/JP2004/011407
(87) International publication number: WO 2005/014138

(57) **Abstract**

A method for separating a target substance from a mixture using a first solvent and a second solvent wherein the first solvent and the second solvent undergo a reversible phase change from a biphasically separated state into a mutually dissolved monophasic state by means of changing the temperature, wherein an upstream region and an intermediate region of a column containing the first solvent are kept within a range of the temperature allowing for a monophasic mutual dissolution and a downstream region of the column is kept within a range of the temperature allowing for a biphasic separation, wherein the second solvent containing the mixture dissolved therein is loaded onto the column from the upstream of the column and thereafter the second solvent phase separated in the downstream region of the column is taken out whereby separating the target substance.

## Description

### Technical Field

The present invention relates to a method and a device for separating and/or purifying a target substance from a mixture containing a plural of substances. More specifically, the invention provides a method and a device for separating a substance based on a novel chromatographic concept capable of separating a target substance readily at a high efficiency by using one solvent as a stationary phase and the other solvent as a mobile phase while utilizing the mutual dissolution phenomenon of two types of the solvents.

### Background Art

Among methods employed frequently in these days for separating a target substance from a solvent containing a plural of substances dissolved therein, a liquid chromatography may be mentioned. This separates a substance based on the difference in the affinity between each substance and a carrier while allowing a sample solution to pass through the gap of the fine carrier whose particle size is consistent. Although a high pressure pump should be used for pumping the fluids for the purpose of increasing the rate at which the substance is separated, a high pressure pump employed on an industrial scale is problematically expensive. While an increase in the particle size of the carrier may be helpful in reducing a load onto the pump, it suffers from a reduced separation capacity as its intrinsic problem. On the other hand, a recent nano-scale synthetic reaction attempts to employ a microchannel, but an application of a chromatography using a solid phase carrier to a nano-flow system is accompanied with a substantial difficulty.

Another method for separating a target substance employs a biphasic system consisting of two solvents. This may be classified broadly into one employing an ultrasonication and one employing a centrifugation.

In a method employing an ultrasonication, two solvents are irradiated ultrasonically to disperse the two phases to increase the area where the two phases are in contact with each other whereby increasing the separation ability. Nevertheless, the use of the ultrasonication may decompose the target substance, and such an ultrasonic emission device can not readily be employed on an industrial scale, and, even if the ultrasonic is employed, the lower limit of the diameter of the solvent to be dispersed is as large as 2 µm, which poses a limitation in improving the separation ability.

A method employing a centrifugation is known as a centrifugal chromatography, but the centrifugation device required is a large-sized complicated one, which is costly and impossible to be expanded to an industrial scale or to be compacted to a smaller scale such as a micro-scale or nano-scale.

On the other hand, a phenomenon that a first solvent and a second solvent undergo a reversible phase change from a biphasically separated state into a mutually dissolved monophasic state by means of changing the temperature has been known for a long time, such as ones observed between water and phenol as well as between water and dipropylamine (Non-patent reference 1). However, the Non-patent reference 1 contains no description with regard to a method for separating substances using such solvents.

A solvent system which is a solvent system for conducting a chemical reaction using a first solvent and a second solvent and in which the first solvent and the second solvent undergo a reversible phase change from a biphasically separated state into a mutually dissolved monophasic state by means of changing the temperature was reported by the present inventors (Patent reference 1).
(Patent reference 1) JP-A-2003-62448
(Non-patent reference 1) "SORITSU TO JOTAIZU", KYORITSU SHUPPAN, p38-41

### Disclosure of the Invention

### (Objectives of the invention)

An objective of the invention is to provide a method and a device for separating and/or purifying a target substance from a mixture without a need of an ultrasonic emission machine, centrifugation device and the like.

### (Means for solving the problems)

We found that the objective described above can be accomplished by applying the phenomenon that a first solvent and a second solvent undergo a reversible phase change from a biphasically separated state into a mutually dissolved monophasic state by means of changing the temperature to a liquid chromatography, whereby establishing the invention.

Thus, the invention is a method for separating a target substance from a mixture using a first solvent and a second solvent wherein the first solvent and the second solvent undergo a reversible phase change from a biphasically separated state into a mutually dissolved monophasic state by means of changing the temperature, wherein an upstream region and an intermediate region of a column containing the first solvent are kept within a range of the temperature allowing for a monophasic mutual dissolution and a downstream region of the column is kept within a range of the temperature allowing for a biphasic separation, wherein the second solvent containing the mixture dissolved therein is loaded onto the column from the upstream of the column and thereafter the second solvent phase separated in the downstream region of the column is taken out whereby separating the target substance.

Also, the invention is a method for separating a target substance from a mixture using a first solvent and a second solvent wherein the first solvent and the second solvent undergo a reversible phase change from a biphasically separated state into a mutually dissolved monophasic state by means of elevating the temperature, wherein an upstream region and an intermediate region of a column containing the first solvent are kept at a temperature lower by 5°C than the mutual dissolution temperature or above and a downstream region of the column is kept below a temperature lower by 5°C than the mutual dissolution temperature, wherein the second solvent containing the mixture dissolved therein is loaded onto the column from the upstream of the column and thereafter the second solvent phase separated in the downstream region of the column is taken out whereby separating the target substance.

Furthermore, the invention is a method for separating a target substance from a mixture using a first solvent and a second solvent wherein the first solvent and the second solvent undergo a reversible phase change from a biphasically separated state into a mutually dissolved monophasic state by means of lowering the temperature, wherein an upstream region and an intermediate region of a column containing the first solvent are kept at a temperature higher by 5°C than the mutual dissolution temperature or below and a downstream region of the column is kept above a temperature higher by 5°C than the mutual dissolution temperature, wherein the second solvent containing the mixture dissolved therein is loaded onto the column from the upstream of the column and thereafter the second solvent phase separated in the downstream region of the column is taken out whereby separating the target substance.

Furthermore, the invention is a device for separating a target substance from a mixture using a first solvent and a second solvent, wherein the first solvent and the second solvent undergo a reversible phase change from a biphasically separated state into a mutually dissolved monophasic state by means of changing the temperature, said device comprising: a column containing the first solvent; a first temperature controller which controls the temperature in an upstream region and an intermediate region of said column; a second temperature controller which controls the temperature in a downstream region of said column; a loading port via which the second solvent containing the mixture dissolved therein is introduced from the upstream region of the column; and, a sampling port via which the second solvent phase after a biphasic separation in the downstream region of the column is taken out.

The invention is also a separation device having, in a device described above, a first temperature controller in the intermediate region of the column and a third temperature controller in the upstream region of the column instead of the first temperature controller which controls the temperature in an upstream region and an intermediate region of said column.

The invention is also a method for regenerating a column in a device described above wherein the third temperature controller is set within a range of the temperature enabling a biphasic separation and wherein the second solvent is allowed to undergo a counter-flow from the sampling port for taking the second solvent phase out and wherein the first solvent phase is taken out from the upstream region of the column.

### Brief Description of the Drawings

Fig. 1 is a dissolution phase scheme of cyclohexane (CH) and dimethylimidazolidinone (DMI).
Fig. 2 shows an inventive separation device.
Fig. 3 shows a schematic view of a plural of columns attached to each other.
Fig. 4 illustrates the regeneration of columns when a plural of columns attached to each other.
Fig. 5 is a dissolution phase scheme of cyclohexane as a first solvent and dimethylformamide (DMF) and DMI as second solvents.
Fig. 6 is a dissolution phase scheme of cyclohexane as a first solvent and DMI and dimethylacetamide (DMA) as second solvents.
Fig. 7 is a dissolution phase scheme of cyclohexane as a first solvent and DMF and DMI as second solvents.
Fig. 8 is a dissolution phase scheme of cyclohexane as a first solvent and DMF and DMA as second solvents.
Fig. 9 is a dissolution phase scheme of decaline as a first solvent and DMF and DMI as second solvents.

### Best Mode for Carrying Out the Invention

A first solvent employed in the invention corresponds to a stationary phase in a conventional liquid chromatography, and a second solvent corresponds to a mobile phase. Based on the nature of a target substance to be separated, the first solvent and the second solvent can appropriately be selected. Accordingly, one serving as a first solvent (stationary phase) for a certain target substance can serve as a second solvent (mobile phase) for another target substance.

The combination of a first solvent and a second solvent employed in the invention is preferably a combination of solvents having different polarities, although it is not limited particularly as long as it enables a reversible phase change from a biphasically separated state into a mutually dissolved monophasic state by means of changing the temperature. As used herein, the solvent having a lower polarity when compared with the other solvent is referred to as a less polar solvent, while one having a higher polarity is referred to as a highly polar solvent. Accordingly, one serving as a less polar solvent in a certain combination of solvents can serve as a highly polar solvent in another combination.

A less polar solvent may for example be a saturated hydrocarbon, a cyclic saturated hydrocarbon, an unsaturated hydrocarbon, a cyclic unsaturated hydrocarbon, an aromatic compound, a linear or cyclic saturated or unsaturated group-carrying compound, among which one having 4 to 240 carbon atoms is preferred. More particularly, the less polar solvent is preferably a cycloalkane, with cyclohexane, methylcyclohexane and decaline being more preferred and cyclohexane being further preferred. As a less polar solvent, one listed above can be employed alone or in combination with one or more, and can contain various solutes dissolved therein.

A highly polar solvent may for example be water, a nitroalkane, a nitrile, an alcohol, a halogenated alkyl, an amide compound, an imidazolidinone compound, a carbonate, an ether, an urea, a carbamate, a carbodiimide, an ester, a carboxylic acid, an aldehyde, ketone and sulfoxide, among which one whose number of carbon atoms, if any, is 3 to 40 is preferred. Among these, an amide compound and an imidazolizine compound are preferred highly polar solvents. More particularly, those further preferred are dimethylimidazolidinone, dimethylformamide and dimethylacetamide. As a highly polar solvent, one listed above can be employed alone or in combination with one or more, and can contain various solutes dissolved therein.

In the invention, a less polar solvent and a highly polar solvent can appropriately be selected based on the nature of a target substance to be separated, and in addition to a combination of a less polar solvent as a first solvent with a highly polar solvent as a second solvent, a combination of a highly polar solvent as a first solvent with a less polar solvent as a second solvent can be employed. Preferably, a first solvent is a less polar solvent and a second solvent is a highly polar solvent.

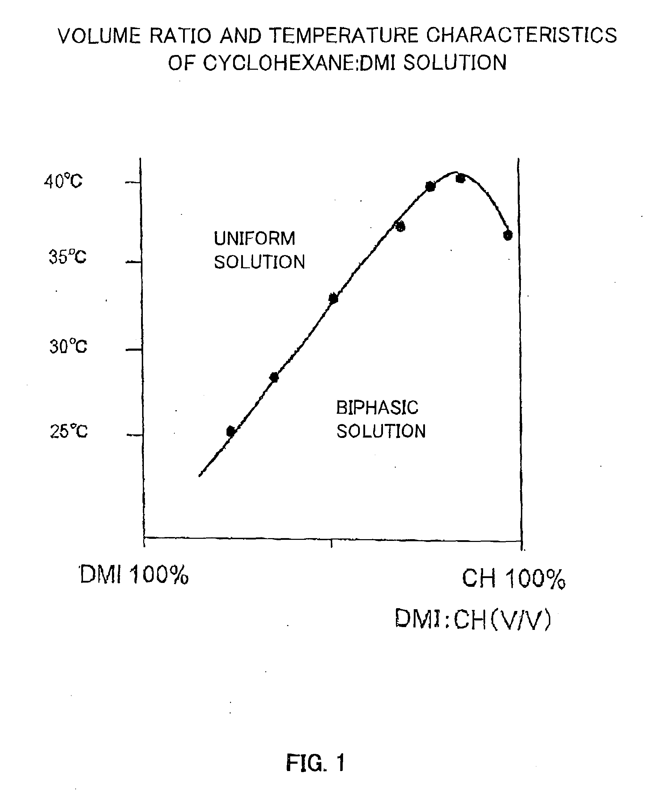

Whether a first solvent and a second solvent undergo a reversible phase change from a biphasically separated state into a mutually dissolved monophasic state by means of changing the temperature or not can readily be determined by preparing a dissolution phase scheme. Thus, a fluid consisting of a first solvent and a second solvent at a varying concentration is prepared and subjected to a change in temperature and examined whether it becomes biphasic or monophasic for example by a macroscopic observation. As used herein, the temperature for a borderline between a biphasic and monophasic states is referred to as a mutual dissolution temperature. As an example, a dissolution phase scheme employing cyclohexane (CH) as a first solvent and dimethylimidazolidinone (DMI) as a second solvent is shown in Fig. 1.

Depending on the combination of a first solvent and a second solvent, a system exists which changes from biphasic to monophasic upon elevation of the temperature or which changes from biphasic to monophasic upon lowering the temperature. Some particular system may change from monophasic to biphasic upon elevation of the temperature and then to monophasic again upon further elevation of the temperature. Any of such combinations of the solvents may be selected based on the nature of a target substance to be separated.

For example when using cyclohexane as a first solvent and dimethylimidazolidinone as a second solvent, the phase changes from biphasic to monophasic reversibly by elevating the temperature as shown in Fig. 1. For example at the volume ratio of 1:1 cyclohexane:dimethylimidazolidinone, the mutual dissolution temperature is about 33°C.

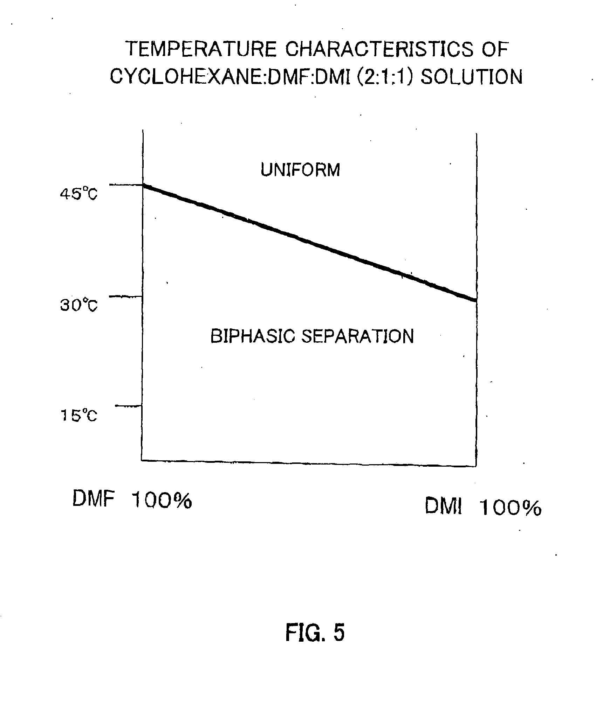

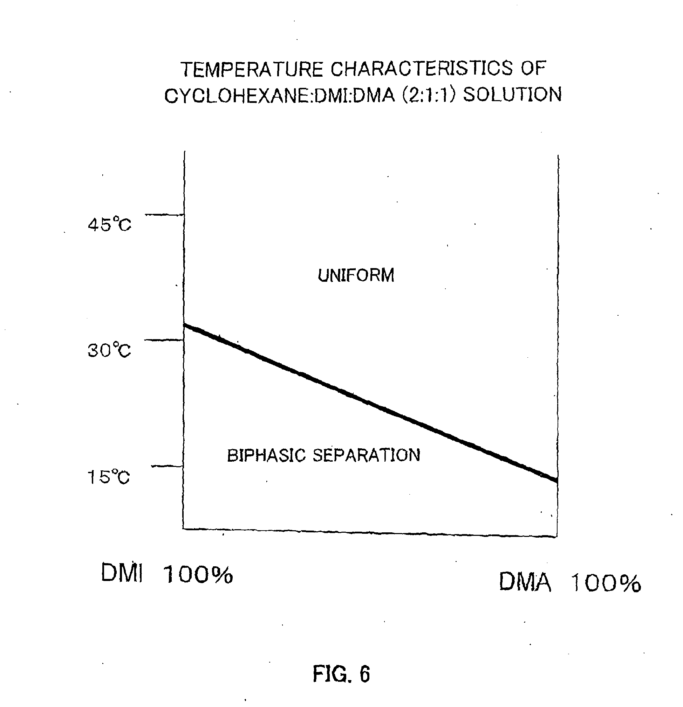

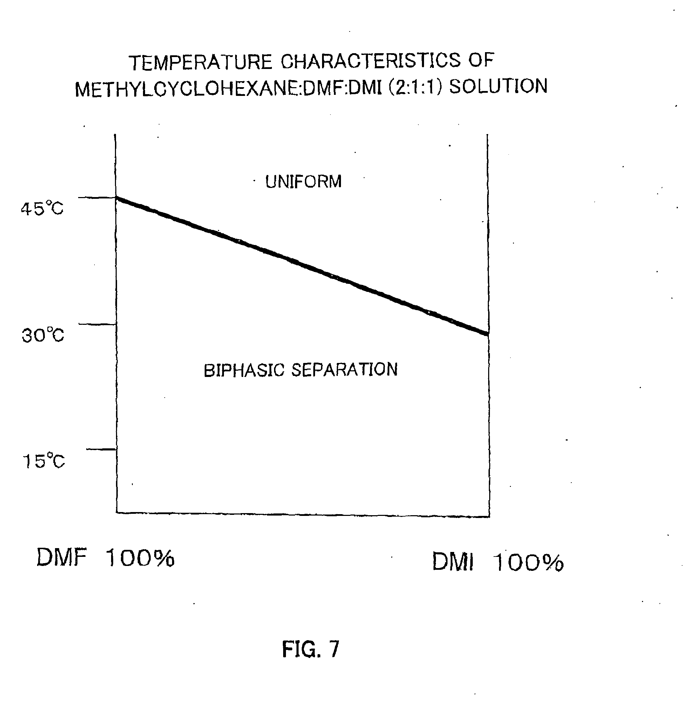

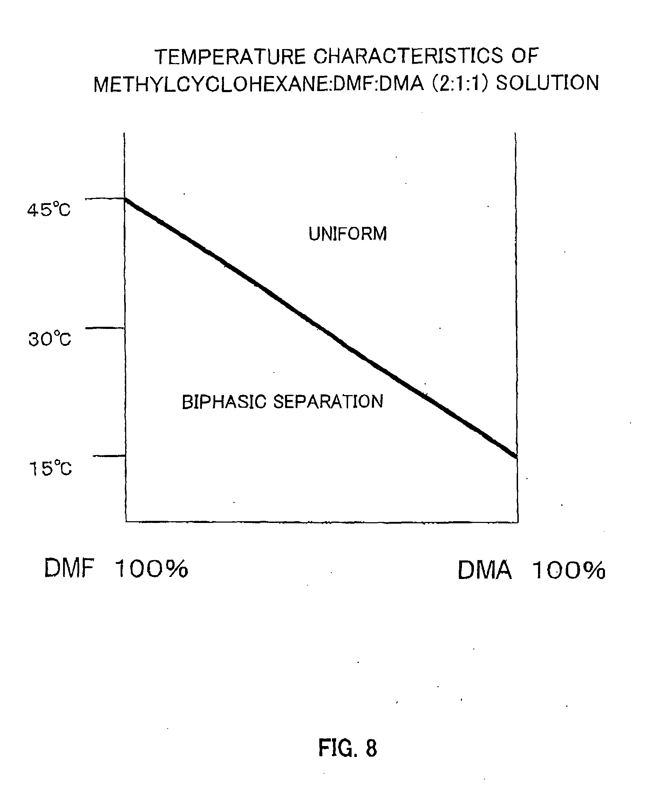

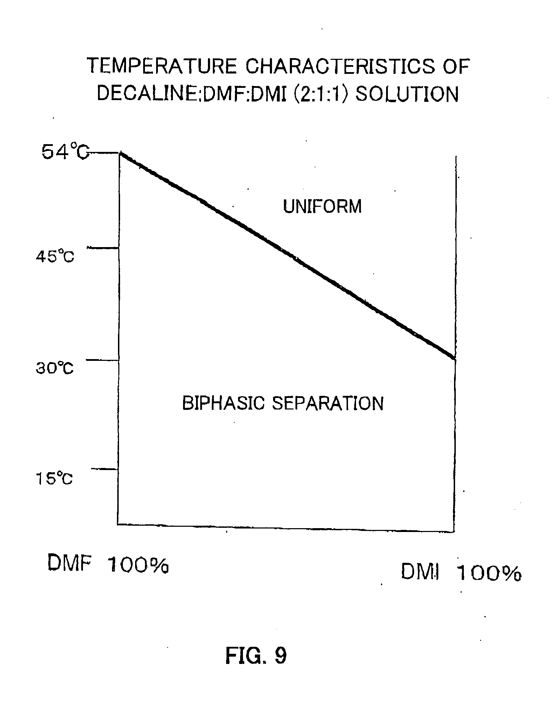

Fig. 5 shows a dissolution phase scheme of cyclohexane as a first solvent and dimethylformamide (DMF) and DMI as second solvents, Fig. 6 shows a dissolution phase scheme of cyclohexane as a first solvent and DMI and dimethylacetamide (DMA) as second solvents, Fig. 7 shows a dissolution phase scheme of methylcyclohexane as a first solvent and DMF and DMI as second solvents, Fig. 8 shows a dissolution phase scheme of methylcyclohexane as a first solvent and DMF and DMA as second solvents, and Fig. 9 shows a dissolution phase scheme of decaline as a first solvent and DMF and DMI as second solvents. In these cases, the volume ratio of the first solvent and the second solvent is fixed to 1:1, and the volume ratio of the two solvents constituting the second solvent is varied. As evident from these figures, a desired mutual dissolution temperature can readily be obtained by changing the composition of the two solvents constituting the second solvent.

In the first embodiment of the invention, a first solvent is loaded into a column, and an upstream region and an intermediate region of a column are kept within a range of the temperature allowing for a monophasic mutual dissolution and a downstream region of the column is kept within a range of the temperature allowing for a biphasic separation. Then, a second solvent in which the mixture containing a target substance and additional components is dissolved is loaded onto the column from the upstream of the column. When the second solvent containing the mixture dissolved therein arrives at the upstream region and the intermediate region of a column, the first solvent and the second solvent are dissolved mutually to form a monophasic liquid. Here the target substance and additional components contained in the mixture can interact at the level of molecules with the first solvent, and if such additional components exhibit high affinities for example to the first solvent then they will remain still in the first solvent. Then, upon arrival of the second solvent at the downstream region of the column, the system undergoes a change in the temperature whereby separating and becoming biphasic. The second solvent phase thus separated is substantially free of the additional components, and the second solvent phase containing only the target substance can be taken out. As a result, the target substance can exclusively be separated from the mixture containing the target substance and the additional components.

It is also possible that after the second solvent containing the mixture dissolved therein is loaded onto the column from the upstream of the column, the second solvent having no mixture dissolved therein is loaded onto the column from the upstream of the column. As a result, the second solvent containing no mixture can serve as a mobile phase of a liquid chromatography, thus facilitating the elution of the target substance. Also in such a case, the additional components do not necessarily remain completely in the first solvent, and the target substance can efficiently be separated utilizing the difference in the affinity to the first solvent between the target substance and the additional components. Thus, for example in the case that the additional components have higher affinities to the first solvent when compared with the target substance, then the second solvent containing the mixture dissolved therein becomes a monophasic liquid in the upstream region and the intermediate region of a column, where the additional components exhibit potent interactions with the first solvent when compared with the target substance and the additional components remain in the monophasic region for a prolonged period. In the downstream of the column, the second solvent containing the target substance as a substantially exclusive solute will be eluted first. Thereafter the second solvent containing the additional components will be eluted. Accordingly, by utilizing the difference in the time over which each substance is retained in the column (retention time), the target substance can efficiently be separated. While the volume of the second solvent containing no mixture may vary depending on the target substance, additional components, first solvent, second solvent, temperature and the like, the fluid is pumped preferably at a constant rate using a metering pump and the like for the purpose of a stable separation. In such a case, it is preferred to taken out the second solvent separated from the downstream of the column in a volume based on the volume of the second solvent which was loaded.

In the second solvent separated in the downstream, the first solvent is dissolved although in a small amount, and the first solvent in the column is reduced gradually corresponding to the removal of the second solvent. In order to compensate this, the second solvent containing no mixture is preferably saturated preliminarily with the first solvent. As a result, a stable separation procedure can continuously be conducted. In addition, the second solvent containing no mixture is preferably adjusted preliminarily at a temperature identical to the temperature of the upstream of the column. While the mutual dissolution temperature may vary depending on the composition ratio of the first solvent and the second solvent, the composition ratio of the first solvent and the second solvent can constantly be kept by predetermining the pumping rate so that the amounts of the first solvent and the second solvent present in the column are constant, as a result the mutual dissolution temperature can be kept constant.

In the second embodiment of the invention, first solvent and a second solvent undergo a reversible phase change from a biphasically separated state into a mutually dissolved monophasic state by means of elevating the temperature are employed. An upstream region and an intermediate region of a column containing the first solvent are kept at a temperature lower by 5°C than the mutual dissolution temperature or above and a downstream region of the column is kept below a temperature lower by 5°C than the mutual dissolution temperature. Accordingly, when the temperature of the upstream region and the intermediate region of the column is set below the mutual dissolution temperature, the biphasically separated state is kept unlike the first embodiment of the invention. Nevertheless, this temperature region poses a reduced interfacial tension between the first solvent phase and the second solvent phase, which allows the both to undergo a mutual dispersion readily. Accordingly, a target substance and additional components dissolved in the second solvent can interact readily with the first solvent, and the target substance can be separated without becoming completely mutually dissolved monophasic. The temperature of the upstream region and the intermediate region of a column is kept lower by 5°C than the mutual dissolution temperature or above, preferably lower by 3°C than the mutual dissolution temperature or above, more preferably lower by 1°C than the mutual dissolution temperature or above. When setting the temperature of the upstream region and the intermediate region of a column above the mutual dissolution temperature, the embodiment becomes identical to the first embodiment of the invention described above. Otherwise, this second embodiment can be conducted similarly to the first embodiment, and thus is not discussed further.

In the third embodiment of the invention, first solvent and a second solvent undergo a reversible phase change from a biphasically separated state into a mutually dissolved monophasic state by means of lowering the temperature are employed. An upstream region and an intermediate region of a column containing the first solvent are kept at a temperature higher by 5°C than the mutual dissolution temperature or below and a downstream region of the column is kept above a temperature higher by 5°C than the mutual dissolution temperature. Accordingly, when the temperature of the upstream region and the intermediate region of the column is set above the mutual dissolution temperature, the biphasically separated state is kept unlike the first embodiment of the invention. Nevertheless, this temperature region poses a reduced interfacial tension between the first solvent phase and the second solvent phase, which allows the both to undergo a mutual dispersion readily. Accordingly, additional components and a target substance dissolved in the second solvent can interact readily with the first solvent, and the target substance can be separated without becoming completely mutually dissolved monophasic. The temperature of the upstream region and the intermediate region of a column is kept higher by 5°C than the mutual dissolution temperature or below, preferably higher by 3°C than the mutual dissolution temperature or below, more preferably higher by 1°C than the mutual dissolution temperature or below. When setting the temperature of the upstream region and the intermediate region of a column below the mutual dissolution temperature, the embodiment becomes identical to the first embodiment of the invention described above. Otherwise, this third embodiment can be conducted similarly to the first embodiment, and thus is not discussed further.

In the invention, a separation promoting substance can be dissolved or dispersed in a first solvent. Such a separation promoting substance is a substance whose affinities to a target substance and additional components contained in a mixture are different from each other, and which can serve to promote the separation of the target substance when being dissolved or dispersed in the first solvent. The separation promoting substance may for example be inorganic salts, organic salts, inorganic bases, inorganic acids, organic bases, organic acids, Lewis acids, Lewis base, amphoteric substances, ionic photosensitizers (methylene blue), electrolyte, organic metal compounds, alcohols, phenols, aromatic compounds, carboxylic acids, amines, aldehydes, ketones, ethers, amides, nitro compounds, halogenated compounds, thiols, sulfones, sulfoxides, isonitriles, acid anhydrides, esters, water, polar polymers, amino acids and derivatives thereof, peptides and derivatives thereof, proteins and derivatives thereof, nucleic acids and derivatives thereof, saccharides and derivatives thereof, terpenes and derivatives thereof, lipids and derivatives thereof, silica and the like. Among those listed above, an alkylamine having 1 to 30 carbon atoms, especially octadecylamine, can be mentioned as a preferred separation promoting substance. When separating an optically active form from a racemate, it is especially preferred to use a chiral molecule as a separation promoting substance. Such a chiral molecule may for example be optically active amino acids and derivative thereof, saccharides and derivatives thereof, terpenes and derivatives thereof, nucleic acids and derivatives thereof, organic acids and derivatives thereof, other optically active substances and the like.

The shape of a column employed in the invention is not limited particularly, and may be cylindrical, U-shaped, coil and the like. For the purpose of convenience in controlling the temperature, a cylindrical column is preferred.

The size of a column employed in the invention is not limited particularly, and may be on an industrial scale or nano-scale appropriately depending on the purpose. An ability of designing a device in a varying size is due to the fact that the column contains only liquid phases without any solid phases, which enables a marked reduction in the pressure required for pumping.

A column employed in the invention is provided preferably with a first temperature controller in its upstream region and intermediate region and a second temperature controller in its downstream region. While the temperature controller may be any one as long as it can control the temperature of the column, it may for example be a jacket covering the outer surface of a column and allowing a fluid whose temperature is controlled to flow therein, a coil placed in a column allowing a fluid whose temperature is controlled to flow therein, an heater or cooler which controls the temperature of the column externally, and the like. When keeping at room temperature, an exposure to an atmosphere in a room may serve as a temperature controller.

It is further preferred provide a first temperature controller in the intermediate region of the column and a third temperature controller in the upstream region of the column instead of the first temperature controller which controls the temperature in an upstream region and an intermediate region of the column. In such a case, the temperature of the upstream region of the column may preferably be identical to the temperature of the intermediate region, or adjusted within a range of the temperature allowing for a biphasic separation in the case of the first embodiment described above, below a temperature lower by 5°C, preferably by 3°C, more preferably by 1°C than the mutual dissolution temperature in the case of the second embodiment, or above a temperature higher by 5°C, preferably by 3°C, more preferably by 1°C than the mutual dissolution temperature in the case of the third embodiment.

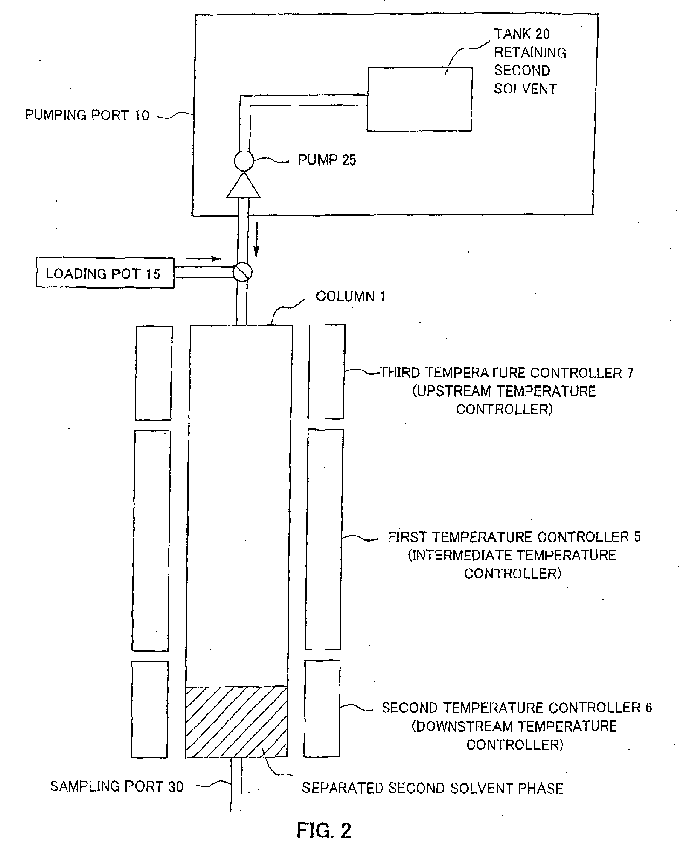

The separation device of the invention is described below with referring to Fig. 2. In an example shown in Fig. 2, an inventive device consists of a column 1, a pumping port 10, a loading port 15 and a sampling port 30. The column 1 is provided with a first to third temperature controllers 5 to 7, respectively, in an intermediate, downstream and upstream regions. The pumping port 10 consists of a tank 20 retaining a second solvent and a fluid supplying pump 25. The column 1 is packed with a first solvent. In this case, the upstream region and the intermediate region of the column 1 are set within a range of the temperature allowing for a mutual dissolution, while the downstream region is set within a range of the temperature allowing for a biphasic separation. Via the loading port 15, the second solvent containing a mixture of a target substance and additional components dissolved therein is loaded. Then by the pumping port 10 the second solvent is pumped continuously from the tank 20 retaining the second solvent into the column 1 by the pump 25. The second solvent containing the mixture undergoes in the upstream region and the intermediate region of the column a mutual dissolution with the first solvent to become monophasic, where the target substance and the additional components interact at the level of molecules with the first solvent. In the downstream region of the column, the separated second solvent phase is taken out continously via the sampling part 30. Upon this, because of the difference in the column retention time due to the difference in the affinity to the first solvent, the target substance is eluted at a certain retention time, and sampled via the sampling port 30.

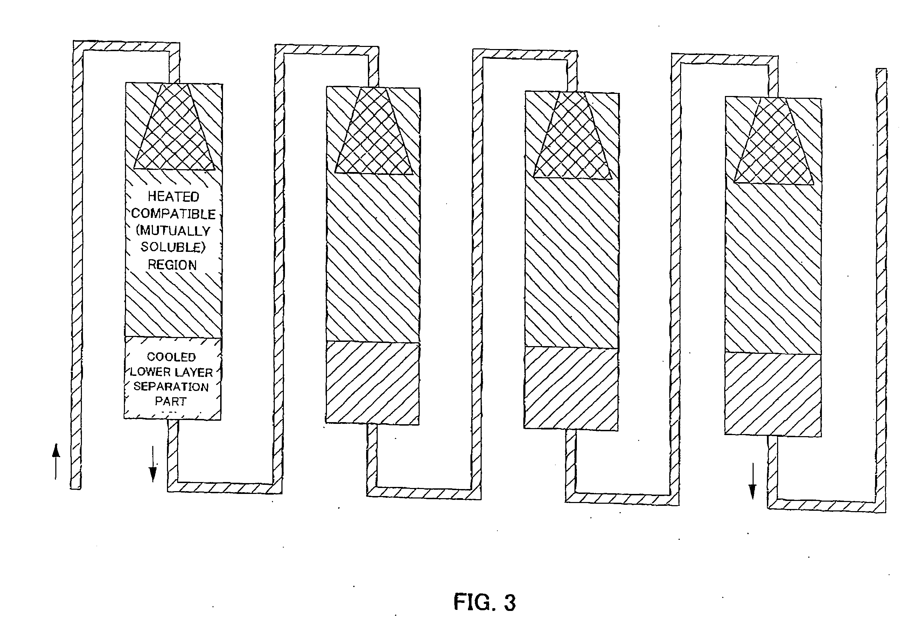

In the invention, by connecting a plural of columns described above in tandem, a target substance can be separated at a higher separation efficiency. Such a case is exemplified in Fig. 3. Fig. 3 shows an example of a biphasic-to-monophasic change as a result of an elevation of the temperature. In Fig. 3, an upstream region and an intermediate region of the column are kept within a range of the temperature allowing for a monophasic mutual dissolution and a downstream region is kept within a range of the temperature allowing for a biphasic separation. Then a cooled second solvent is loaded from the upstream region of each column. Since a heat is given immediately after the loading, a mutual dissolution occurs with a first solvent in the upstream region to form a uniform monophasic liquid. Since the downstream of each column is cooled, a biphasic separation occurs, and the second solvent is separated out as a lower layer when the second layer has a specific gravity higher than that of the first solvent. The second solvent phase thus separated in the downstream region of the column moves to the column outlet into an upstream region of the next column. By repeating this procedure, the second solvent interact with the first solvent repetitively, allowing a target substance to be separated at a high separation efficiency. Also since the column involves a liquid, the pressure required for pumping can be suppressed at a lower level even if a plural columns are connected in tandem, allowing a use on an industrial scale to be accomplished readily.

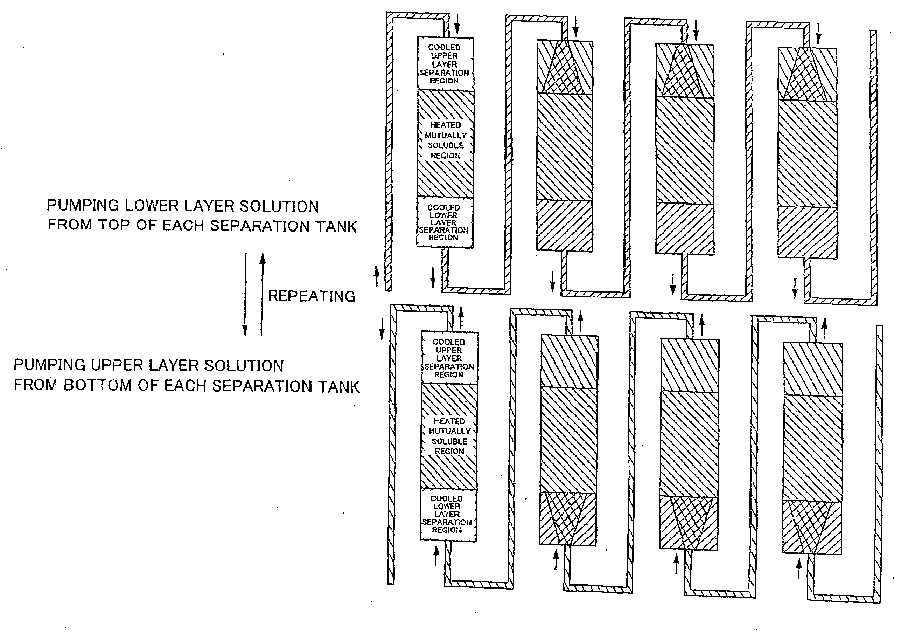

Fig. 4 shows an example of a plural of columns connected in tandem while setting an intermediate region of the column within a range of the temperature allowing for a monophasic mutual dissolution of two solvents and an upstream region and a downstream region of the column within a range of the temperature allowing for a biphasic separation of the two solvents. Here the direction of the liquid flow into the column is switched at a certain time interval. For example, the liquid runs in the direction of a right column from the left for 2 minutes (in this case a second solvent mainly moves to the right column), and after 1 minutes the liquid runs in the direction of the left column from the right for one minute (in this case a first solvent mainly moves to the left column). By repeating this procedure, the first solvent and the second solvent can run in opposite directions while repeating a mutual dissolution and a biphasic separation. As a result, a gradual depletion of one solvent can be avoided and the two solvents are brought into a stationary condition, whereby allowing the column to be regenerated.

### (Advantage of the invention)

According to the invention, a method and a device for separating and/or purifying a target substance from a mixture without using an ultrasonic emission machine, centrifugation device and the like.

### Examples

The invention is further described in the following Examples which are not intended to restrict the invention.

### <Example 1>

A column (glass cylinder of 20 mm in inner diameter, 1.5 m in length) was packed with cyclohexane as a first solvent and an upstream region (150 mm from the top) and a downstream region (150 mm from the bottom) of the column were cooled at 5°C. An intermediate region of the column sandwiched between the upper and lower cooled regions was warmed at 50°C. As a second solvent, dimethylimidazolidinone (DMI) in a volume of 5ml containing each 0.1 mmole of methylene blue as a polar dye component and an anthraquinone as a less polar dye component dissolved therein was loaded onto the column. Subsequently, a solute-free DMI saturated preliminarily with cyclohexane at 5°C was pumped by a peristaltic pump at a rate of 0.5 ml/min. As a result, cyclohexane and DMI underwent a mutual dissolution in the intermediate region of the column to form a uniform monophasic state. The mutual dissolution temperature in this system was about 33°C. The DMI solvent moved gradually in the direction of the downstream, and the DMI phase was separated out upon cooling in the downstream region of the column.

When the DMI phase separated out was fractionated in 10 ml aliquots, a methylene blue fraction was obtained first and then an anthraquinone fraction was obtained, revealing an ability of separating these components.

### <Example 2>

The procedure similar to that in Example 1 was conducted except for using each 1 mmole of ethylmaleimide as a polar component and octadecylmaleimide as a less polar component.

A DMI phase separated out first gave an ethylmaleimide fraction followed by an octadecylmaleimide fraction, revealing an ability of separating these components.

### <Example 3>

The procedure similar to that in Example 2 was conducted except for using a tandem connection of 8 columns (glass cylinder of 20 mm in inner diameter, 1.0 m in length) packed with cyclohexane as a first solvent.

A DMI phase separated out first gave an ethylmaleimide fraction followed by an octadecylmaleimide fraction, revealing an ability of separating these components.

### <Example 4>

A Teflon (registered trade mark) tube as a column (10 mm in inner diameter, 3 m in length) was packed with cyclohexane as a first solvent and an upstream region (150 mm from the top) and a downstream region (150 mm from the bottom) of the tube were cooled at 5°C. An intermediate region of the column sandwiched between the upper and lower cooled regions was warmed at 70°C. As a second solvent, dimethylformamide (DMF) in a volume of 5ml containing each 0.1 mmole of 9-anthracene methanol and 9-octadecyloxyanthracene methanol dissolved therein was loaded onto the tube. Subsequently, a solute-free DMF saturated preliminarily with cyclohexane at 5°C was pumped by a peristaltic pump at a rate of 0.5 ml/min. As a result, cyclohexane and DMF underwent a mutual dissolution in the intermediate region of the column to form a uniform monophasic state. The mutual dissolution temperature in this system was about 45°C. The DMF solvent moved gradually in the direction of the downstream, and the DMF phase was separated out upon cooling in the downstream region of the column.

When the DMF phase separated out was fractionated, a 9-anthracene methanol fraction was obtained first and then a 9-octadecyloxyanthracene methanol fraction was obtained, revealing an ability of separating these components.

### <Example 5>

The separation was conducted using octadecylamine as a separation promoting substance. A Teflon (registered trade mark) tube as a column (10 mm in inner diameter, 3 m in length) was packed with cyclohexane containing octadecylamine dissolved therein at 1M concentration and an upstream region (150 mm from the top) and a downstream region (150 mm from the bottom) of the tube were cooled at 5°C. An intermediate region of the column sandwiched between the upper and lower cooled regions was warmed at 70°C. As a second solvent, DMF in a volume of 5ml containing each 0.1 mmole of p-nitroaniline and p-nitrobenzoic acid dissolved therein was loaded onto the tube. Subsequently, a solute-free DMF saturated preliminarily with cyclohexane at 5°C was pumped by a peristaltic pump at a rate of 0.5 ml/min. As a result, cyclohexane and DMF underwent a mutual dissolution in the intermediate region of the column to form a uniform monophasic state. The mutual dissolution temperature in this system was about 45°C. The DMF solvent moved gradually in the direction of the downstream, and the DMF phase was separated out upon cooling in the downstream region of the column.

When the DMF phase separated out was fractionated, a p-nitroaniline fraction was obtained first and then a p-nitrobenzoic acid fraction was obtained, revealing an ability of separating these components.

### <Example 6>

The procedure similar to that in Example 5 was conducted except for using a chiral molecule octadecanoyl-L-phenylalanine octadecyl ester as a separation promoting substance.

A DMF phase separated out was fractionated and revealed to give a p-nitroaniline fraction first and then p-nitrobenzoic acid fraction, revealing an ability of separating these components.

## Claims

1. A method for separating a target substance from a mixture using a first solvent and a second solvent wherein the first solvent and the second solvent undergo a reversible phase change from a biphasically separated state into a mutually dissolved monophasic state by means of changing the temperature, wherein an upstream region and an intermediate region of a column containing the first solvent are kept within a range of the temperature allowing for a monophasic mutual dissolution and a downstream region of the column is kept within a range of the temperature allowing for a biphasic separation, wherein the second solvent containing the mixture dissolved therein is loaded onto the column from the upstream of the column and thereafter the second solvent phase separated in the downstream region of the column is taken out whereby separating the target substance.

2. The method according to Claim 1 wherein the upper region of the column is kept within a range of the temperature allowing for a biphasic separation.

3. A method for separating a target substance from a mixture using a first solvent and a second solvent wherein the first solvent and the second solvent undergo a reversible phase change from a biphasically separated state into a mutually dissolved monophasic state by means of elevating the temperature, wherein an upstream region and an intermediate region of a column containing the first solvent are kept at a temperature lower by 5°C than the mutual dissolution temperature or above and a downstream region of the column is kept below a temperature lower by 5°C than the mutual dissolution temperature, wherein the second solvent containing the mixture dissolved therein is loaded onto the column from the upstream of the column and thereafter the second solvent phase separated in the downstream region of the column is taken out whereby separating the target substance.

4. The method according to Claim 3 wherein the upper region of the column is kept below a temperature lower by 5°C than the mutual dissolution temperature.

5. A method for separating a target substance from a mixture using a first solvent and a second solvent wherein the first solvent and the second solvent undergo a reversible phase change from a biphasically separated state into a mutually dissolved monophasic state by means of lowering the temperature, wherein an upstream region and an intermediate region of a column containing the first solvent are kept at a temperature higher by 5°C than the mutual dissolution temperature or below and a downstream region of the column is kept above a temperature higher by 5°C than the mutual dissolution temperature, wherein the second solvent containing the mixture dissolved therein is loaded onto the column from the upstream of the column and thereafter the second solvent phase separated in the downstream region of the column is taken out whereby separating the target substance.

6. The method according to Claim 5 wherein the upper region of the column is kept above a temperature higher by 5°C than the mutual dissolution temperature.

7. The method according to Claim 1 wherein, after the second solvent containing the mixture dissolved therein is loaded onto the column from the upstream of the column, the first solvent and the second solvent undergo an mutual dissolution in the intermediate region of the column to become monophasic.

8. The method according to Claim 1 wherein a separation promoting substance is dissolved or dispersed in the first solvent.

9. The method according to Claim 8 wherein the separation promoting substance is a chiral molecule and/or an alkyl or alkenylamine.

10. The method according to Claim 9 wherein the chiral molecule is an amino acid derivative and/or a saccharide derivative.

11. The method according to Claim 9 wherein the alkylamine is octadecylamine.

12. The method according to Claim 1 wherein a plural of columns are employed in tandem.

13. The method according to Claim 1 wherein the first solvent is a less polar solvent.

14. The method according to Claim 13 wherein the less polar solvent is at least one selected from the group consisting of a saturated hydrocarbon, a cyclic saturated hydrocarbon, an unsaturated hydrocarbon, a cyclic unsaturated hydrocarbon, an aromatic compound, a linear or cyclic saturated or unsaturated group-carrying compound.

15. The method according to Claim 1 wherein the first solvent is at least one selected from the group consisting of cyclohexane, methylcyclohexane and decaline.

16. The method according to Claim 1 wherein the second solvent is a highly polar solvent.

17. The method according to Claim 1 wherein the highly polar solvent is at least one selected from the group consisting of water, a nitroalkane, a nitrile, an alcohol, a halogenated alkyl, an amide compound, an imidazolidinone compound, a carbonate, an ether, an urea, a carbamate, a carbodiimide, an ester, a carboxylic acid, an aldehyde, ketone and sulfoxide.

18. The method according to Claim 1 wherein the second solvent is at least one selected from the group consisting of dimethylimidazolidinone, dimethylformamide and dimethylacetamide.

19. The method according to Claim 1 wherein, after the second solvent containing the mixture dissolved therein is loaded onto the column from the upstream of the column, the second solvent having no mixture dissolved therein is loaded onto the column from the upstream of the column.

20. The method according to Claim 19 wherein the second solvent having no mixture dissolved therein is saturated by the first solvent.

21. The method according to Claim 19 wherein the temperature of the second solvent having no mixture dissolved therein is adjusted preliminarily so that it is equal to the temperature in the upstream of the column.

22. A device for separating a target substance from a mixture using a first solvent and a second solvent, wherein the first solvent and the second solvent undergo a reversible phase change from a biphasically separated state into a mutually dissolved monophasic state by means of changing the temperature, said device comprising:
a column containing the first solvent;
a first temperature controller which controls the temperature in an upstream region and an intermediate region of said column;
a second temperature controller which controls the temperature in a downstream region of said column;
a loading port via which the second solvent containing the mixture dissolved therein is introduced from the upstream region of the column; and,
a sampling port via which the second solvent phase after a biphasic separation in the downstream region of the column is taken out.

23. The device according to Claim 22 further comprising a pump port which pumps the second solvent to the upstream region of the column.

24. The separation device having a plural of the devices according to Claim 22 in tandem.

25. The device according to Claim 22 having a first temperature controller in the intermediate region of the column and a third temperature controller in the upstream region of the column instead of the first temperature controller which controls the temperature in an upstream region and an intermediate region of said column.

26. A method for regenerating a column in a device according to Claim 25 wherein the third temperature controller is set within a range of the temperature enabling a biphasic separation and wherein the second solvent is allowed to undergo a counter-flow from the sampling port for taking the second solvent phase out and wherein the first solvent phase is taken out from the upstream region of the column.
